# EUROPÄISCHE PATENTSCHRIFT

(11) **EP 2 080 617 B1**
(45) Veröffentlichungstag und Bekanntmachung des Hinweises auf die Patenterteilung: **20.07.2011**
(21) Anmeldenummer: 08170897.6
(22) Anmeldetag: 08.12.2008
(51) Int. Cl.: B41F 13/008, F16H 37/02

(54) **Stufenloses Getriebe für eine Druckmaschine**
Infinite drive for a printing machine
Engrenage continu pour une presse

(30) Priorität: 17.01.2008 DE 102008000074
(43) Veröffentlichungstag der Anmeldung: 22.07.2009
(73) Patentinhaber: ZF Friedrichshafen AG, 88038 Friedrichshafen (DE)
(72) Erfinder: Richter, Frank, 88094 Oberteuringen (DE); Schmitz, Ewald, 88718 Daisendorf (DE)

(56) Entgegenhaltungen:
- EP-A- 0 534 224
- DE-A1- 19 930 998
- US-A- 4 922 790
- US-A1- 2007 245 911

## Beschreibung

Die Erfindung bezieht sich auf eine Antriebsanordnung mit einem Getriebe und mit mindestens zwei Walzen einer Druckmaschine nach dem Oberbegriff des Anspruchs 1.

Aus der DE 10 2006 013 747 A1 ist bereits ein Getriebe für eine Druckmaschine bekannt. Die Walzen eines Feuchtwerks können wahlweise in einem ersten Betriebsmodus und in einem zweiten Betriebsmodus für den Druckbetrieb betrieben werden. Im ersten Betriebsmodus, rollt eine Feuchtauftragwalze im Wesentlichen ohne Schlupf auf einem Druckformzylinder ab. Dabei sind die Umfangsoberflächengeschwindigkeiten der Feuchtauftragwalze und des Druckformzylinders im Wesentlichen gleich groß. Im zweiten Betriebsmodus rollt die Feuchtauftragwalze mit einem getriebetechnisch erzielten Schlupf auf dem Druckformzylinder ab. Dabei besteht zwischen der Umfangsoberflächengeschwindigkeit der Feuchtauftragwalze und der Umfangsoberflächengeschwindigkeit des Druckformzylinders eine Geschwindigkeitsdifferenz, wobei die zuerst genannte Umfangsoberflächengeschwindigkeit kleiner als die zuletzt genannte ist.

Ein Nachteil dieser Art von Getriebe ist, dass nur zwei Gänge vorhanden sind und eine weitere Variation der Geschwindigkeitsdifferenz nicht möglich ist.

Aus der EP 0534224 A1 ist eine Einrichtung für Bogenrotationsdruckmaschinen beschrieben, mit der eine Phasenverschiebung zwischen Walzen bzw. Zylindern bewirkt werden kann. Dabei ist in einem Planetengetriebe eines von zwei Hohlrädern mit einer Positionier- und Bremseinrichtung verbunden. Durch Abschalten des Antriebes und Zuschalten der Positionier- und Bremseinrichtung kann die notwendige Phasenverschiebung erfolgen.

Die US 2007/0245911 A1 beschreibt einen Antrieb für eine Rotationsdruckmaschine mit einem Planetengetriebe, mit dem die Drehlage einer Übertragungstrommel stufenlos verstellt werden kann. Zu diesem Zweck trennt Kupplung, die im Druckbetrieb geschlossen ist, zwei Elemente des Planetengetriebes voneinander, so dass die Drehmomentübertragung zwischen einem treibenden und einem getriebenen Zahnrad zeitweise unterbrochen ist.

Schließlich beschreibt die US 4922790 A eine Vorrichtung zum Verändern der Winkellage zwischen einer Eingangs- und einem Ausgangskomponente, die unter anderem in Druckmaschinen verwendet werden kann, um die Winkellage mehrerer Wellen zueinander einzustellen. Diese Vorrichtung umfasst zwei Planetenradsätze, die jeweils ohne Sonnenrad ausgebildet sind. Durch Abbremsen eines inneren Gehäuseteiles kann die Winkellage zwischen einer Eingangskomponente und einer Ausgangskomponente der Vorrichtung verstellt werden.

Daher ist es die Aufgabe der Erfindung, eine Antriebsanordnung, welche eine größere Variation der Geschwindigkeitsdifferenz zwischen zwei Walzen einer Druckmaschine ermöglicht und ein Verfahren zur Steuerung der Antriebsanordnung darzustellen.

Diese Aufgabe wird wie in Patentanspruch 1 und 5 angegeben gelöst. Vorteilhafte Weiterbildungen ergeben sich aus den Unteransprüchen.

Die Antriebsanordnung im Sinne der Erfindung ist für jede Art von Druckmaschine für den Bogenoffsetdruck geeignet.

Gemäß der Erfindung wird eine Antriebsanordnung mit einem Getriebe und mit mindestens zwei Walzen zum Einsatz in einer Druckmaschine vorgesehen. Die Druckmaschine weist mindestens zwei Walzen auf, wobei eine Walze durch das Getriebe angetrieben wird. Mittels des Getriebes wird ein stufenloses Einstellen einer Differenz der Umfangsoberflächengeschwindigkeiten der beiden Walzen ermöglicht. Das Getriebe besteht aus einer Bremse und einem Planetengetriebe mit einem ersten, einem zweiten und einem dritten Anschlussglied. Das erste Anschlussglied ist das Antriebsglied, das zweite Anschlussglied ist das Bremsglied und das dritte Anschlussglied ist das Abtriebsglied. Die drei Anschlussglieder sind üblicherweise einem Hohlrad, einem Sonnenrad und einem Planetensteg mit Planetenrädern zugeordnet. Erfindungsgemäß ist das Sonnenrad das zweite Anschlussglied und damit das Bremsglied, welches mit der Bremse verbunden ist.

In einer vorteilhaften Ausführung des Getriebes ist das erste Anschlussglied ein Planetensteg, das zweite Anschlussglied ein Sonnenrad und somit mit der Bremse verbunden und das dritte Anschlussglied ein Hohlrad. Bei aktivierter Bremse wird eine Bremskraft auf das Bremsglied ausgeübt, bei passiver bzw. unaktivierter Bremse ist keine Bremskraft auf dem Bremsglied vorhanden. Die Bremskraft ist stufenlos von keiner Bremskraft bis einer Feststellung des Bremsglieds Steuer- bzw. regelbar, demzufolge ist die Drehzahl des Bremsglieds stufenlos regelbar. Die Art der Bremse ist vom Konstrukteur freiwählbar und kann irgendwelcher bekannten Art sein, beispielsweise eine reibschlüssige Bremse oder eine Hysteresebremse.

Mit der Bremse in einem unaktivierten Zustand stellt sich durch die Friktion zwischen den Walzen ein Synchronbetrieb ein, bei welchem die Umfangsoberflächengeschwindigkeiten der beiden Walzen gleich sind. Mit festgestellter Bremse wird eine Minimaldrehzahl das Abtriebsglied und somit eine maximale Differenz der Umfangsoberflächengeschwindigkeiten der beiden Walzen erreicht.

In einer vorteilhaften Lösung der Erfindung ist eine Getriebestufe zwischen der Bremse und dem ersten Anschlussglied des Planetengetriebes vorgesehen. Die Übersetzung der Getriebestufe ist derart ausgelegt, dass die Drehzahl der Bremse erhöht wird und somit das Drehmoment verringert wird. Dadurch wird die Belastung auf die aktivierte Bremse geringer, da eine geringere Bremskraft benötig wird, um das Bremsglied abzubremsen. Die Bremse kann somit kleiner ausgelegt werden, womit gleichzeitig eine präzise Steuerung bzw. Regelung der Bremskraft vereinfacht wird.

Weiter ist eine elektronische Steuerung und/oder Regelung des Getriebes vorgesehen. Mit der elektronischen Steuerung und/oder Regelung kann die Stärke des Bremseingriffs geregelt werden und somit auch die Differenz der Umfangsoberflächengeschwindigkeit der beiden Walzen. Eine Steuerung und/oder Regelung der Bremse bzw. des Getriebes kann damit abhängig von den Druckgeschwindigkeiten und/oder anderen Druckbedingungen gemacht werden, um eine optimale Differenz der Umfangsoberflächengeschwindigkeit der beiden Walzen zu erzeugen.

Konstruktionsbedingt weist zumindest eine Walze einen Kanaldurchgang auf, in welche Elemente, um den Papierbogen zu fördern, angeordnet sind. Als ein Kanaldurchgang im Kontaktbereich zwischen zwei Walzen einrollt, entsteht ein Drehmomentstoß, wegen des plötzlichen Friktionsnachlasses zwischen den beiden Walzen. Der Friktionsnachlass kommt daraus, dass die Walzen keinen Kontakt mit einander haben, wenn im Kanaldurchgang eine Walze sich in einer vermeintlichen Kontaktzone mit einer anderen Walze befindet. Durch die erfindungsgemäße Antriebsanordnung kann ein Drehmomentstoß vermieden werden, dadurch dass das Übersetzungsverhältnis des Getriebes zu dem Druckzyklus angepasst werden. Wenn ein Kanaldurchgang in die vermeintliche Kontaktzone zwischen zwei Walzen eintritt, wird die angelegte Bremskraft des Getriebes verringert bzw. die Bremse gelöst, und somit wird der Drehmomentstoß verringert. Somit wird störende Einflüsse auf das Druckergebnis vermieden und eine höhere Qualität des Druckverfahrens erreicht.

Ein Verfahren zur stufenlosen Einstellung einer Differenz der Umfangsoberflächengeschwindigkeiten zweier Walzen einer Druckmaschine mit einem Getriebe der oben beschriebenen Art sieht vor, dass zur Erzeugung einer Differenz der Umfangsoberflächengeschwindigkeit den beiden Walzen die Bremse aktiviert wird. Durch die Abbremsung des zweiten Anschlussglieds wird auch das dritte Anschlussglied abgebremst und eine Differenz der Umfangsoberflächengeschwindigkeiten der Walzen wird erzeugt.

Des Weiteren wird eine größere Differenz der Umfangsoberflächengeschwindigkeit dadurch erzeugt, dass die Bremse eine höhere Bremskraft auf dem zweiten Anschlussglied erzeugt, wobei der größte Differenz der Umfangsoberflächengeschwindigkeiten bei einer festgehaltenen Bremse erzeugt wird. Durch eine passive bzw. geöffnete Bremse wird eine Synchrondrehzahl zwischen den Walzen eingestellt.

Wie oben beschrieben ist in zumindest einer Walze einer Druckmaschine konstruktiv bedingt ein Kanaldurchgang vorgesehen, um den Papierbogen zu fördern. Ein weiteres, bevorzugtes Verfahren schlägt vor, dass wenn ein Kanaldurchgang in den vermeintliche Kontaktzone zwischen zwei Walzen einrollt, die Bremse derart angesteuert wird, dass die entstehende Friktionsunterbrechung zwischen den Walzen ganz oder teilweise ausgeglichen wird. Die Bremskraft der Bremse wird somit verringert während des Kanaldurchgangs in die vermeintliche Kontaktzone eintritt, um den verringerten Rollwiderstand zwischen den Walzen auszugleichen.

Weitere Vorteile der Erfindung ergeben sich aus unter Bezugnahme auf die Zeichnungen prinzipmäßig beschriebenen Ausführungsbeispielen.

Es zeigen:
Fig. 1 eine erste Variante des Getriebes und
Fig. 2 eine zweite Variante des Getriebes.

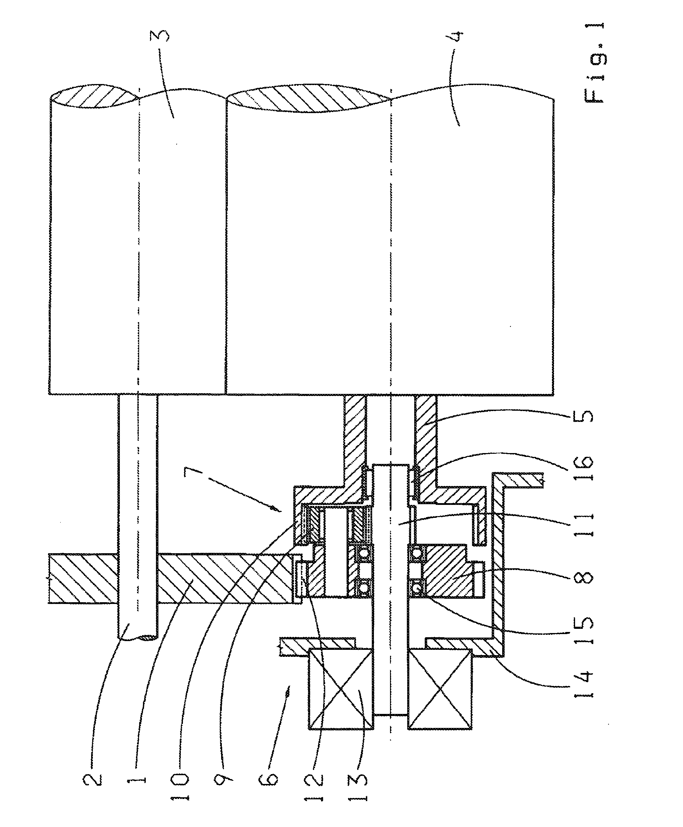

In Fig. 1 wird eine Variante des stufenlosen Getriebes 6 gezeigt. Das Antriebsrad 1 ist mit einer Antriebswelle 2 verbunden, weiter ist eine erste Walze 3 direkt mit der Antriebswelle 2 verbunden. Eine zweite Walze 4 wird von der Abtriebswelle 5 des Getriebes 6 angetrieben, die beiden Walzen 3, 4 rollen aufeinander ab. Um eine Differenzdrehzahl zwischen den beiden Walzen 3, 4 zu erzeugen, ist die Übersetzung des Getriebes 6 stufenlos einstellbar.

Das Antriebsrad 1 ist über die Zahnradstufe 12 mit dem Planetensteg 8 des Planetengetriebes 7 verbunden. Die Planetenräder 9 des Planetenstegs 8 kämmen mit dem Hohlrad 10 und dem Sonnenrad 11. Das Sonnenrad 11 ist durch die hier nicht weiter definierte gehäusefeste Bremse 13 abbremsbar und die Bremse 13 ist im Gehäuse 14 befestigt. Der Planetensteg 8 ist mittels der Lagerung 15 auf dem Sonnenrad 11 gelagert, welches durch die Lagerung 16 auf der mit der Walze 4 fest verbundenen Abtriebswelle 5 gelagert ist.

Wenn die Bremse 13 sich in einem Passivzustand bzw. einem geöffneten Zustand befindet, sind die beiden Walzen 3, 4 im Synchronbetrieb. Durch die Friktion zwischen den Walzen 3, 4 stellt sich die Synchrondrehzahl ein. Durch ein Aktivieren der Bremse wird das Sonnenrad 11 abgebremst und somit verändert sich die Drehzahl an der Abtriebswelle 5. Dadurch entsteht ein Drehzahlunterschied zwischen den Walzen 3, 4.

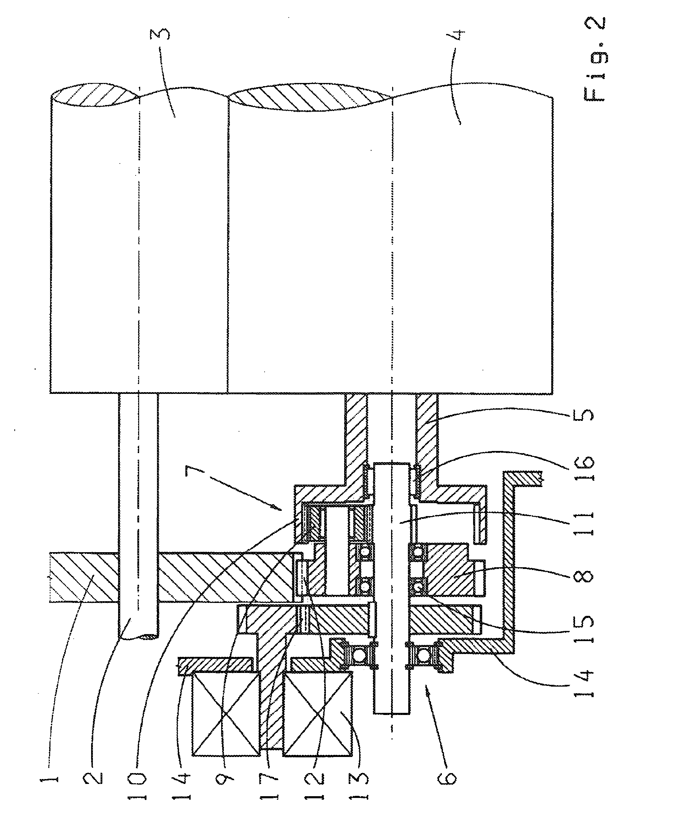

Fig. 2 zeigt eine Variante des Getriebes, bei welcher die nicht weiter definierte Bremse 13 über eine Zahnradstufe 17 mit dem Sonnenrad 11 des Planentengetriebes 7 verbunden ist. Die Übersetzung der Zahnradstufe 17 ist derart ausgelegt, dass die Drehzahl der Bremse 13 erhöht wird und somit das Bremsmoment verringert wird. Dadurch wird die Belastung auf die aktivierte Bremse 13 geringer, da eine geringere Bremskraft nötig ist, um das Bremsglied abzubremsen.

### Bezugszeichen

- 1: Antriebsrad
- 2: Antriebswelle
- 3: erste Walze
- 4: zweite Walze
- 5: Abtriebswelle
- 6: Getriebe
- 7: Planetengetriebe
- 8: Planetensteg
- 9: Planetenräder
- 10: Hohlrad
- 11: Sonnenrad
- 12: Zahnradstufe
- 13: Bremse
- 14: Gehäuse
- 15: Lagerung
- 16: Lagerung
- 17: Zahnradstufe

## Patentansprüche

1. Antriebsanordnung mit einem Getriebe und mit mindestens zwei Walzen (3, 4) einer Druckmaschine, wobei eine von den Walzen durch das Getriebe (6) angetrieben wird, wobei durch das Getriebe (6) eine Differenz der Umfangsoberflächengeschwindigkeiten der Walzen (3, 4) erzeugbar ist, wobei das Getriebe (6) stufenlos ist und zumindest aus einer Bremse (13) und einem Planetengetriebe (7) besteht und das Planetengetriebe (7) ein Antriebsglied (8, 10), ein Bremsglied (11) und ein Abtriebsglied (8, 10) aufweist und das Bremsglied (11) mit der Bremse verbunden ist, **dadurch gekennzeichnet, dass** das Bremsglied (11) ein Sonnenrad (11) ist.

2. Antriebsanordnung nach Anspruch 1, **dadurch gekennzeich**n e t , dass die Bremse (13) eine Hysteresebremse oder eine reibschlüssige Bremse ist.

3. Antriebsanordnung nach Anspruch 1 oder 2, **dadurch gekennzeichnet, dass** eine zusätzliche Getriebestufe (17) zwischen dem Bremsglied (11) und der Bremse (13) vorgesehen ist.

4. Antriebsanordnung nach einem der Ansprüche 1 bis 3, **dadurch gekennzeichnet, dass** eine elektronische Steuerung und/oder Regelung der Bremse (13) vorgesehen ist.

5. Verfahren zur stufenlosen Einstellung einer Differenzdrehzahl zwischen zwei Walzen (3, 4) einer Druckmaschine mittels eines Getriebes, wobei das Getriebe (6) ein Planetengetriebe (7) mit einem Antriebsglied (8, 10), einem Bremsglied (11) und einem Abtriebsglied (8, 10) aufweist, **dadurch gekennzeichnet, dass** ein Sonnenrad (11) das Bremsglied (11) ist und mit einer Bremse (13) verbunden ist, und dass zur Erzeugung einer Differenz der Umfangsoberflächengeschwindigkeiten der Walzen (3, 4), die Bremse (13) aktiviert wird.

6. Verfahren nach Anspruch 5, **dadurch gekennzeichnet, dass**, um eine maximale Differenz der Umfangsoberflächengeschwindigkeiten der Walzen (3, 4) zu erzeugen, das Sonnenrad (11) durch die Bremse (13) festgestellt wird.

7. Verfahren nach einem der Ansprüche 5 oder 6, **dadurch gekennzeichnet, dass** durch ein vollständiges Öffnen der Bremse (13) eine Synchrondrehzahl zwischen den beiden Walzen (3, 4) erzeugt wird.

8. Verfahren nach einem der Ansprüche 5 bis 7, **dadurch gekennzeichnet, dass** wenn ein Kanaldurchgang in einen vermeintlichen Kontaktzone zwischen zwei Walzen eintritt, die Bremse (13) derart angesteuert wird, dass die entstehende Friktionsunterbrechung zwischen den Walzen (3, 4) ausgeglichen wird.

9. Verfahren nach einem der Ansprüche 5 bis 8, **dadurch gekennzeichnet, dass** eine Bremskraft der Bremse (13) verringert wird, wenn ein Kanaldurchgang in einen vermeintlichen Kontaktzone zwischen zwei Walzen eintritt.

## Claims

1. Drive arrangement having a gear mechanism and having at least two rolls (3, 4) of a printing press, one of the rolls being driven by the gear mechanism (6), it being possible for a difference in the circumferential-surface speeds of the rolls (3, 4) to be produced by the gear mechanism (6), the gear mechanism (6) being infinitely variable and comprising at least one brake (13) and one planetary gear mechanism (7), and the planetary gear mechanism (7) having a drive element (8, 10), a brake element (11) and an output element (8, 10), and the brake element (11) being connected to the brake, **characterized in that** the brake element (11) is a sun gear (11).

2. Drive arrangement according to Claim 1, **characterized in that** the brake (13) is a hysteresis brake or a frictional brake.

3. Drive arrangement according to Claim 1 or 2, **characterized in that** an additional gear-mechanism stage (17) is provided between the brake element (11) and the brake (13).

4. Drive arrangement according to one of Claims 1 to 3, **characterized in that** an electronic controller and/or regulator of the brake (13) are/is provided.

5. Method for infinitely variably setting a differential rotational speed between two rolls (3, 4) of a printing press by means of a gear mechanism, the gear mechanism (6) having a planetary gear mechanism (7) with a drive element (8, 10), a brake element (11) and an output element (8, 10), **characterized in that** a sun gear (11) is the brake element (11) and is connected to a brake (13), and **in that** the brake (13) is activated in order to produce a difference in the circumferential-surface speeds of the rolls (3, 4).

6. Method according to Claim 5, **characterized in that** the sun gear (11) is fixed by the brake (13) in order to produce a maximum difference in the circumferential-surface speeds of the rolls (3, 4).

7. Method according to either of Claims 5 and 6, **characterized in that** a synchronous rotational speed is produced between the two rolls (3, 4) by complete opening of the brake (13).

8. Method according to one of Claims 5 to 7, **characterized in that**, if a channel passage enters into a supposed contact zone between two rolls, the brake (13) is actuated in such a way that the frictional interruption which is produced between the rolls (3, 4) is compensated for.

9. Method according to one of Claims 5 to 8, **characterized in that** a braking force of the brake (13) is reduced if a channel passage enters into a supposed contact zone between two rolls.

## Revendications

1. Agencement d'entraînement avec une transmission et au moins deux cylindres (3, 4) d'une machine d'impression, l'un des cylindres étant entraîné par la transmission (6), une différence de vitesses de surface périphériques des cylindres (3, 4) pouvant être créée par la transmission (6), la transmission (6) étant à variation continue et se composant d'au moins un frein (13) et d'un engrenage planétaire (7) et l'engrenage planétaire (7) présentant un organe d'entraînement (8, 10), un organe de freinage (11) et un organe de prise de force (8, 10), et l'organe de freinage (11) étant connecté au frein, **caractérisé en ce que** l'organe de freinage (11) est une roue solaire (11).

2. Agencement d'entraînement selon la revendication 1, **caractérisé en ce que** le frein (13) est un frein à hystérésis ou un frein à engagement par friction.

3. Agencement d'entraînement selon la revendication 1 ou 2, **caractérisé en ce qu'**un étage de transmission supplémentaire (17) est prévu entre l'organe de freinage (11) et le frein (13).

4. Agencement d'entraînement selon l'une quelconque des revendications 1 à 3, **caractérisé en ce qu'**il est prévu une commande électronique et/ou une régulation électronique du frein (13).

5. Procédé d'ajustement en continu d'une vitesse de rotation différentielle entre deux cylindres (3, 4) d'une machine d'impression au moyen d'une transmission, la transmission (6) présentant un engrenage planétaire (7) avec un organe d'entraînement (8, 10), un organe de freinage (11) et un organe de prise de force (8, 10), **caractérisé en ce qu'**une roue solaire (11) constitue l'organe de freinage (11) et est connectée à un frein (13), et **en ce que** pour produire une différence entre les vitesses de surface périphériques des cylindres (3, 4), le frein (13) est activé.

6. Procédé selon la revendication 5, **caractérisé en ce que** pour produire une différence maximale entre les vitesses de surface périphériques des cylindres (3, 4), la roue solaire (11) est fixée par le frein (13).

7. Procédé selon l'une quelconque des revendications 5 ou 6, **caractérisé en ce qu'**une vitesse de rotation synchrone entre les deux cylindres (3, 4) est produite par une ouverture complète du frein (13).

8. Procédé selon l'une quelconque des revendications 5 à 7, **caractérisé en ce que** lorsqu'un passage de canal entre dans une zone de contact présumée entre deux cylindres, le frein (13) est commandé de telle sorte que l'interruption de friction se produisant entre les cylindres (3, 4) soit compensée.

9. Procédé selon l'une quelconque des revendications 5 à 8, **caractérisé en ce qu'**une force de freinage du frein (13) est réduite, lorsqu'un passage de canal entre dans une zone de contact présumée entre deux cylindres.
